Europäisches Patentamt

European Patent Office

Office européen des brevets

(19)

(11) EP 1 650 533 A1

(12) DEMANDE DE BREVET EUROPEEN

(43) Date de publication:
26.04.2006 Bulletin 2006/17

(51) Int Cl.:
*G01C 21/34* (2006.01)   *G08G 1/0968* (2006.01)

(21) Numéro de dépôt: 05292182.2

(22) Date de dépôt: 17.10.2005

(84) Etats contractants désignés:
AT BE BG CH CY CZ DE DK EE ES FI FR GB GR
HU IE IS IT LI LT LU LV MC NL PL PT RO SE SI
SK TR
Etats d'extension désignés:
AL BA HR MK YU

(30) Priorité: 20.10.2004 FR 0411164

(71) Demandeur: FRANCE TELECOM
75015 Paris (FR)

(72) Inventeurs:
• Bouget, Loic
  35000 Rennes (FR)
• Gioia, Patrick
  35700 Rennes (FR)
• Magret, Jean-Michel
  35235 Thorigne-Fouillard (FR)

(74) Mandataire: Bentz, Jean-Paul et al
Novagraaf Technologies,
122, rue Edouard Vaillant
92593 Levallois-Perret Cedex (FR)

(54) **Procédé de sélection de points remarquables dans un itinéraire**

(57) L'invention porte sur un procédé de guidage, comprenant les étapes de :

- génération (106) d'un itinéraire entre des points de départ et d'arrivée;
- génération d'indications de guidage incluant :

    - la détermination (107) de plusieurs points remarquables proches d'une partie de l'itinéraire à partir d'une base de données (2);
    - le calcul (107) d'un indice représentatif de la visibilité des points remarquables déterminés depuis ladite partie de l'itinéraire ;
    - la sélection (107) d'au moins un point remarquable en fonction de l'indice de visibilité ;

- la génération (108) d'une indication de guidage associée au point remarquable sélectionné.

Fig. 1

EP 1 650 533 A1

**Description**

L'invention porte sur les procédés de guidage et en particulier sur la génération d'itinéraires prenant en compte des points remarquables.

Pour se rendre à une destination connue, plusieurs procédés sont connus. Selon un premier procédé, l'utilisateur transmet une requête pour obtenir l'itinéraire jusqu'à la destination connue. Un système reçoit la requête et localise l'utilisateur. La localisation est soit effectuée automatiquement (par exemple au moyen d'un dispositif GPS), soit manuellement par l'utilisateur (par exemple au moyen du clavier d'un ordinateur connecté au système). Le système calcule l'itinéraire en exploitant une base de données et établit une feuille de route indiquant notamment les bifurcations à suivre. Le système restitue la feuille de route à l'utilisateur soit au préalable, soit en temps réel sous forme d'ordres de guidage. Cependant, la feuille de route ne mentionne que des signalisations routières (panneaux, signalisation au sol, feux...) qui ne sont pas toujours visibles par l'utilisateur. Il est ainsi fréquent qu'une route mentionnée sur la feuille de route ne soit en pratique pas identifiée au niveau d'une intersection où se trouve l'utilisateur.

Afin d'apporter plus d'informations à l'utilisateur, un second procédé de détermination d'itinéraire insère des références à des points remarquables dans la feuille de route, par exemple des monuments. Un tel procédé est notamment décrit dans la demande de brevet FR-2 851 042 au nom de la demanderesse. Des points remarquables sont mémorisés dans une base de données et sont mentionnés dans la feuille de route si l'itinéraire calculé passe à leur proximité. Les points remarquables sont alors considérés comme visibles depuis un point de l'itinéraire. Les informations concernant l'itinéraire ou les points remarquables sont restituées soit sous forme d'ordres de guidage, soit sous forme de plan. Un point remarquable est par exemple identifié par un symbole particulier sur un plan ou par une indication vocale.

L'invention vise à améliorer un tel procédé de guidage. Il existe donc un besoin pour un procédé de guidage comprenant les étapes de :

- génération d'un itinéraire entre des points de départ et d'arrivée;
- génération d'indications de guidage incluant :

  - la détermination de plusieurs points remarquables proches d'une partie de l'itinéraire à partir d'une base de données ;
  - le calcul d'un indice représentatif de la visibilité des points remarquables déterminés depuis ladite partie de l'itinéraire ;
  - la sélection d'au moins un point remarquable en fonction de l'indice de visibilité ;
  - la génération d'une indication de guidage associée au point remarquable sélectionné.

Selon une variante, l'indice de visibilité est calculé à partir de paramètres d'au moins deux types différents.

Selon une autre variante, le calcul de l'indice de visibilité prend en compte des paramètres choisis dans le groupe comprenant la vitesse de l'utilisateur, son mode de transport, son sexe, son âge, une distance minimale entre lui et le point remarquable, l'angle entre sa direction et une surface du point remarquable, la dimension, la couleur ou la forme du point remarquable. Selon encore une variante, une feuille de route, associée à un itinéraire généré, est établie et inclut les indications de guidage associées au point remarquable sélectionné. La feuille de route est par exemple inscrite dans un document.

Selon encore une autre variante, un nouvel itinéraire entre les points de départ et d'arrivée est généré en fonction d'au moins un point remarquable sélectionné en fonction de son indice de visibilité ; une feuille de route associée au nouvel itinéraire est générée et inclut les indications associées au point remarquable sélectionné.

Selon encore une variante, le nouvel itinéraire est généré de façon à augmenter l'indice de visibilité du point remarquable sélectionné depuis une partie du nouvel itinéraire.

Selon une autre variante, le procédé comprend en outre les étapes de :

- localisation d'un utilisateur empruntant un itinéraire généré;
- restitution à l'utilisateur des indications de guidage à l'approche du point remarquable sélectionné.

Selon encore une autre variante, l'indice de visibilité d'un point remarquable est calculé lorsque l'utilisateur est situé dans un périmètre donné incluant le point remarquable. Les indications de guidage peuvent être restituées vocalement ou visuellement.

Selon une variante, un point remarquable est sélectionné lorsque son indice de visibilité dépasse un seuil prédéterminé.

Selon encore une variante, pour ladite partie de l'itinéraire, un nombre maximum prédéfini de points remarquables dont l'indice de visibilité est le plus élevé est sélectionné.

L'invention porte également sur un programme d'ordinateur adapté pour mettre en oeuvre un tel procédé.

L'invention porte encore sur un serveur de guidage, qui comprend :

- des moyens d'accès à une base de données de points remarquables ;
- un organe de traitement configuré pour générer un itinéraire entre des points de départ et d'arrivée et configuré pour générer des indications de guidage en déterminant plusieurs points remarquables proches d'une partie de l'itinéraire à partir de la base de données, en calculant un indice représentatif de la visibilité des points remarquables déterminés depuis ladite partie de l'itinéraire, en sélectionnant au moins un point remarquable en fonction de l'indice de visibilité et en générant une indication de guidage associée au point remarquable sélectionné ;
- des moyens de transmission de l'itinéraire généré au terminal d'un utilisateur.

L'invention sera mieux comprise à la lecture de la description qui suit, accompagnée des dessins annexés qui représentent :

- Figure 1, un organigramme d'un procédé de génération de feuille de route réalisé avant d'emprunter l'itinéraire ;
- Figure 2, un organigramme d'un procédé de guidage en temps réel ;
- Figure 3, un organigramme d'un procédé d'enregistrement d'un profil d'utilisateur utilisé pour calculer un indice de visibilité ;
- Figure 4, une représentation schématique d'un serveur permettant de mettre en oeuvre le procédé illustré à la figure 2.

Un point remarquable sera par la suite désigné par le terme POI (abréviation de point of interest en langue anglaise).

L'invention propose de déterminer des points remarquables proches d'une partie d'un itinéraire, puis de calculer un indice représentatif de leur visibilité depuis cette partie de l'itinéraire. Un point remarquable est sélectionné en fonction de son indice de visibilité, puis une indication de guidage associée à ce point remarquable est générée.

La sélection d'un point remarquable est donc effectuée en fonction d'un paramètre objectif autre que sa distance avec une partie de l'itinéraire. L'indice de visibilité permet également de modifier le niveau de sélection de points remarquables. L'indice de visibilité est avantageusement calculé à partir de plusieurs paramètres de types différents.

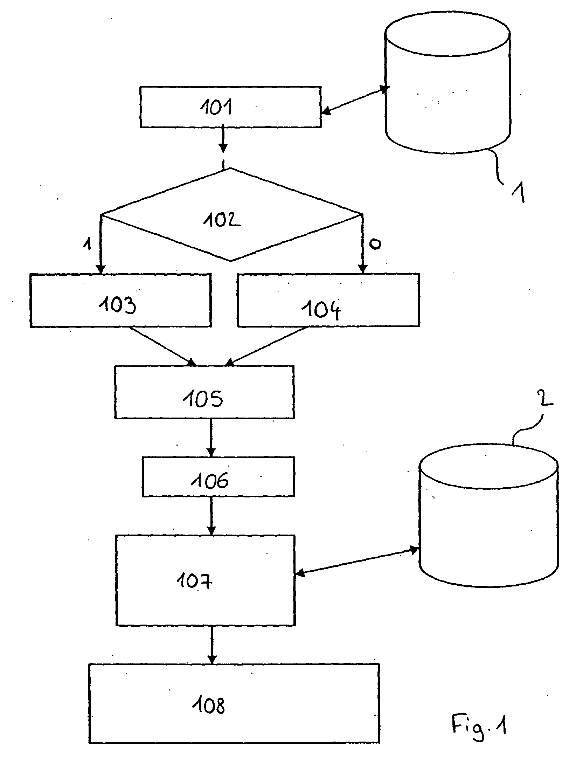

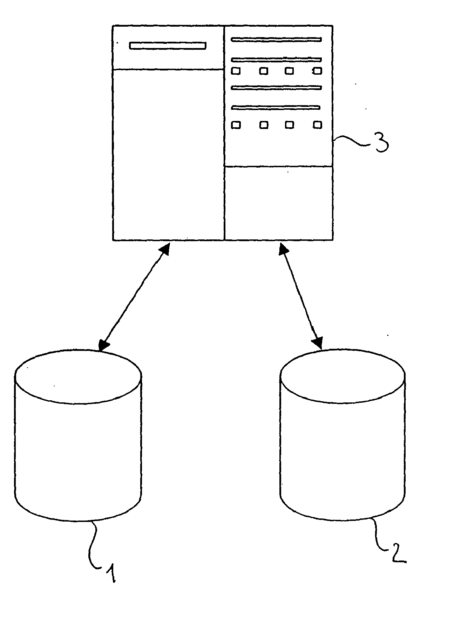

La figure 1 illustre un exemple de mise en oeuvre de l'invention dans lequel une feuille de route est établie au préalable par un utilisateur connecté à un serveur de navigation 3 (illustré à la figure 4).

A l'étape 101, le serveur de navigation 3 charge un profil associé à l'utilisateur. Ce profil est avantageusement mémorisé dans une base de données 1 d'utilisateurs accessible par le serveur 3.

Afin d'éviter que l'utilisateur n'ait à saisir sa localisation, à l'étape 102, le serveur détermine avantageusement si l'utilisateur peut être localisé automatiquement, par exemple au moyen d'un GPS ou de tout autre moyen adéquat. Dans l'affirmative, l'utilisateur est automatiquement localisé à l'étape 103 et sa position est assimilée au point de départ. Dans la négative, le serveur demande un point de départ de l'utilisateur à l'étape 104.

A l'étape 105, le serveur demande le point d'arrivée de l'utilisateur. A l'étape 106, le serveur génère de façon connue en soi un itinéraire à partir des points de départ et d'arrivée.

A l'étape 107, on détermine un ensemble de POI proches d'une partie de l'itinéraire (par exemple un point ou un tronçon de l'itinéraire). Un indice de la visibilité de ces POI depuis cette partie de l'itinéraire est ensuite calculé. Pour cela, la localisation, ainsi que des paramètres du POI utiles pour le calcul de l'indice de visibilité sont récupérés par le serveur 3 dans une base de données 2. Ces paramètres sont par exemple contenus dans un serveur d'annuaire ou dans un serveur d'un guide touristique. Avantageusement, un nombre de POI prédéfini présentant les indices de visibilité les plus élevés est alors sélectionné. On peut ainsi limiter la densité des POI sélectionnés pour une partie donnée de l'itinéraire.

A l'étape 108, une feuille de route est établie et inclut des indications de guidage associées aux POI sélectionnés et à l'itinéraire généré. La feuille de route est inscrite dans un document, par exemple sous forme d'un plan ou d'une liste d'instructions, sur papier, dans un fichier au format html, jpg ou texte...

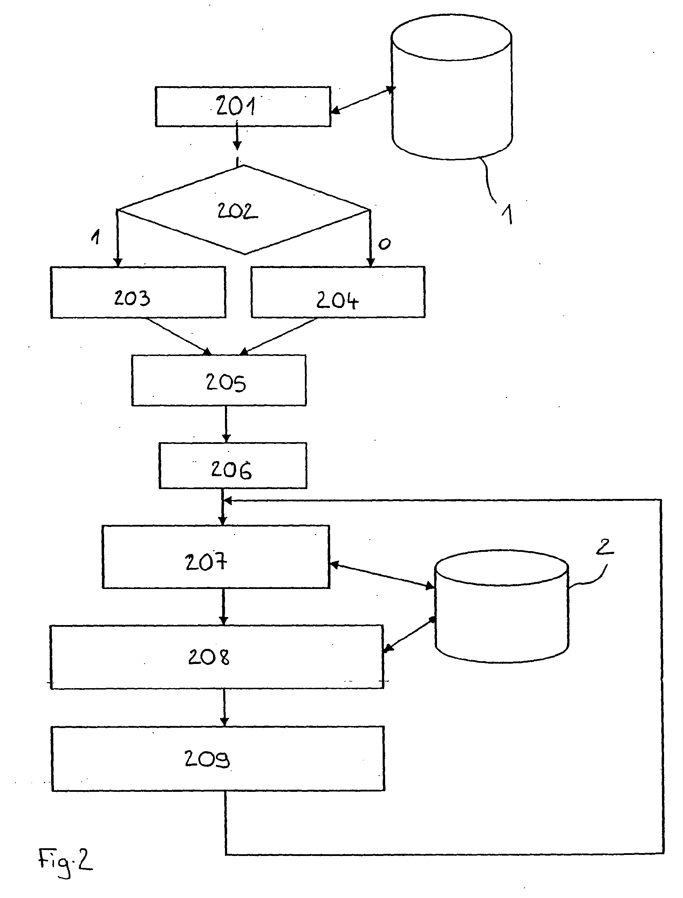

La figure 2 illustre un exemple de mise en oeuvre de l'invention dans lequel une feuille de route est établie puis complétée en temps réel pour un utilisateur se déplaçant le long d'un itinéraire.

Les étapes 201 à 209 correspondent à l'établissement d'une feuille de route initiale et peuvent être remplacées par les étapes 101 à 106.

A l'étape 201, un dispositif de navigation (non illustré) charge un profil associé à l'utilisateur. Ce profil est avantageusement mémorisé dans la base de données 1 accessible par le dispositif de navigation.

A l'étape 202, le dispositif de navigation détermine avantageusement si l'utilisateur peut être localisé automatiquement. Dans l'affirmative, l'utilisateur est automatiquement localisé à l'étape 203 et sa position est assimilée au point de départ. Dans la négative, le dispositif de navigation demande un point de départ de l'utilisateur à l'étape 204.

A l'étape 205, le dispositif de navigation demande le point d'arrivée de l'utilisateur. A l'étape 206, le dispositif de navigation génère de façon connue en soi un itinéraire à partir des points de départ et d'arrivée.

A l'étape 207, on détermine un ensemble de POI proches d'une partie de l'itinéraire qu'aborde l'utilisateur. A l'étape 208, l'indice de visibilité de ces POI depuis cette partie de l'itinéraire est calculé, en utilisant les bases de données 1 et 2. Le calcul de l'indice de visibilité prend avantageusement en compte la vitesse de déplacement et la position de l'utilisateur en temps réel, afin d'obtenir un résultat plus adapté au contexte de navigation de l'utilisateur. Des POI présentant un indice de visibilité supérieur à un seuil prédéterminé sont alors sélectionnés.

A l'étape 209, la feuille de route est complétée pour inclure des indications de guidage associées aux POI sélectionnés extraits de la base de données 2. Les étapes 207 à 209 sont effectuées périodiquement le long de l'itinéraire effectué par l'utilisateur, par exemple à chaque envoi d'une nouvelle position par l'utilisateur.

On peut prévoir un dispositif de navigation intégré dans un véhicule. On peut également prévoir un dispositif de navigation accédant aux bases de données d'un serveur distant. On peut encore prévoir un dispositif de navigation distant de l'utilisateur, transmettant des indications de guidage à un terminal de l'utilisateur.

On va maintenant détailler des exemples de calculs d'indices de visibilité.

Pour cela, les ensembles suivants seront utilisés par la suite :

- ITI : ensemble des itinéraires ;
- Seg2D : ensemble des segments 2D appartenant à un itinéraire de l'ensemble ITI ;
- Pt2D : ensemble des points 2D appartenant à un des segments 2D de l'ensemble Seg2D ;
- TypPOI : ensemble des types de POI possibles.

Les fonctions suivantes seront utilisées par la suite :

- l (X) : x étant un réel,

$$l(x)_{[x1,x2]} = 1 \Leftrightarrow x \in [x1, x2]$$

$$l(x)_{[x1,x2]} = 0 \Leftrightarrow x \notin [x1, x2]$$

- T : T est appliquée à un POI et renvoie son type de POI inclus dans l'ensemble TypPoi.
- MinDis : cette fonction est appliquée à un type de POI et renvoie la distance minimale à partir de laquelle un POI du même type doit être pris en compte.
- MaxDis : cette fonction est appliquée à un type de POI et renvoie la distance maximale à partir de laquelle un POI du même type ne doit plus être pris en compte.
- Dis : cette fonction renvoie la distance euclidienne entre un POI et une position d'observation.
- MinVis : cette fonction est appliquée à un type de POI et renvoie l'indice minimum de visibilité exigé pour ce type de POI. La valeur renvoyée par MinVis est donc comprise entre 0 et 1.
- MaxVis : cette fonction est appliquée à un type de POI et renvoie l'indice maximum de visibilité exigé pour ce type de POI. La valeur réelle renvoyée par MaxVis est donc comprise entre 0 et 1.
- Vis3D : pour un POI et une partie d'itinéraire donnée (un itinéraire, un segment ou un point), cette fonction renvoie un indice de visibilité du POI depuis une partie d'itinéraire. La valeur réelle renvoyée par Vis3D est comprise entre 0 et 1.
- ValiditePoi : les arguments de cette fonction sont le type d'un POI, la distance Dist entre ce POI et une partie d'itinéraire, l'indice de visibilité Vis3D du POI depuis cette partie d'itinéraire. Cette fonction renvoie une valeur binaire de sélection ou non d'un POI.

$$\mathrm{ValiditePoi(t, Dist, Vis3D)} =$$

$$\mathrm{l(Dist)_{[minDis(t), MaxDis(t)]}} * \mathrm{l(Vis3D)_{[MinVis(t), MaxVis(t)]}}$$

- CoutVis : cette fonction fournit un indice de visibilité amélioré d'un POI par rapport aux données utilisateur et à l'itinéraire. Dans cette mise en oeuvre, l'indice de visibilité tient compte du pourcentage visible du POI. Soit p un POI présentant une surface remarquable plane, pos la position d'un observateur, $\alpha$ l'angle entre p et pos (angle entre les vecteurs n et v, n étant un vecteur définissant la normale à la surface remarquable, v étant un vecteur définissant la direction de l'observateur), CoutVis est définie comme suit :

$$Coutvis(p, pos, \alpha) =$$

$$\frac{ValiditePoi(T(p), Dis(p, pos), Vis3D(p, pos)) * Vis3D(p, pos) * |\cos\alpha|}{Dis(p, pos)^2}$$

L'utilisation des angles et des surfaces remarquables planes peut être la suivante : pour un POI donné, on détermine des surfaces qui sont visuellement identifiables par un utilisateur. Pour un hôtel, on sélectionne par exemple toutes les pancartes et panneaux placés sur le bâtiment et portant la mention « hôtel » ou le nom de l'hôtel. Ces surfaces seront utilisées comme références de visibilité. En effet, une personne à proximité du bâtiment l'identifiera beaucoup plus facilement par un panneau que par une quelconque de ses faces. Dans la formule précédente, on remplace également avantageusement le terme $|\cos\alpha|$ par $\cos\alpha$. Ainsi, pour un panneau publicitaire, on déduit d'un indice de visibilité positif que l'utilisateur se trouve dos au panneau ou derrière le panneau, et que celui-ci n'est donc pas visible. L'indice de visibilité prend avantageusement en compte le rapport entre l'aire d'une telle surface et sa distance de l'utilisateur. L'indice de visibilité prend avantageusement en compte la couleur ou la forme de la surface ou du POI.

L'indice de visibilité est avantageusement défini en fonction de la vitesse de l'utilisateur. Des objets de moindre taille peuvent en effet se révéler peu visibles au-delà d'une vitesse donnée. La vitesse instantanée de l'utilisateur pourra par exemple être prise en compte pour une application de guidage en temps réel. Une vitesse supposée ou fixée par l'utilisateur pour des types d'itinéraires donnés sera de préférence également prise en compte pour établir une feuille de route à l'avance.

L'indice de visibilité peut également être défini en fonction du type de moyen de locomotion utilisé pour parcourir l'itinéraire (cycliste, piéton, automobiliste...).

L'indice de visibilité peut être défini non seulement à partir de paramètres de l'itinéraire et des POI mais également à partir de paramètres concernant l'utilisateur. Ces paramètres sont par exemple mémorisés dans un profil dans la base de données 1 ou définis par l'utilisateur ou par un procédé adéquat au moment de la génération de l'itinéraire. Une fonction déterminant la visibilité d'un POI pourra notamment prendre en compte son âge, son sexe, une distance maximale de vision, une distance minimale de vision...

De façon connue en soi, les POI peuvent être signalés sous formes d'ordres de guidage à l'utilisateur. Ces ordres peuvent être inscrits sur une feuille de route ou être restitués vocalement ou visuellement en temps réel durant le déplacement de l'utilisateur, à l'approche d'un POI.

Par ailleurs, on peut prévoir de créer un nouvel itinéraire à partir de l'itinéraire initial généré et des POI sélectionnés. En effet, après avoir sélectionné des POI, on peut générer un nouvel itinéraire présentant des parties dans lesquelles l'indice de visibilité des POI est accru. L'indice de visibilité peut donc être pris en compte pour la génération d'un itinéraire. L'utilisateur pourra également éliminer des POI sélectionner ou ajouter des POI souhaités afin de générer le nouvel itinéraire.

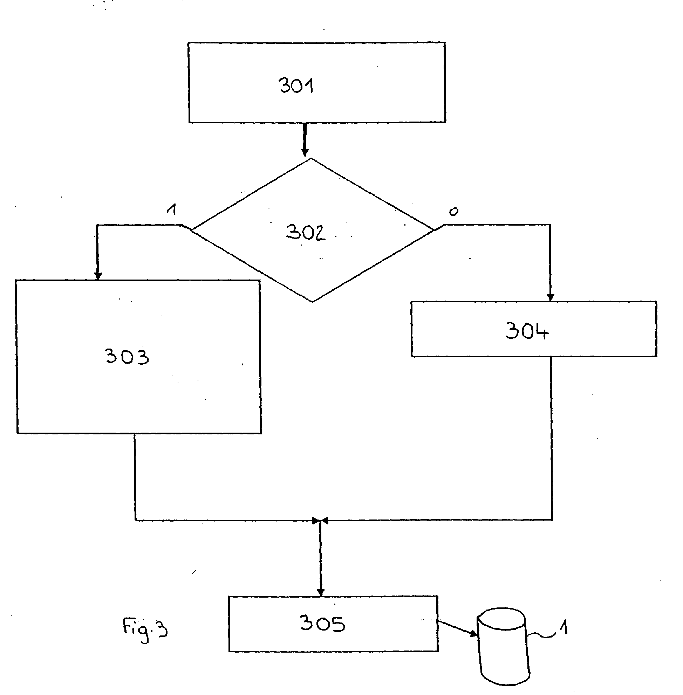

La figure 3 illustre un exemple de procédé d'enregistrement d'un profil d'utilisateur. A l'étape 301, l'utilisateur se connecte à un serveur d'inscription d'un service de navigation. L'utilisateur fournit par exemple des identifiants d'accès ou remplit un formulaire d'inscription. A l'étape 302, le serveur demande à l'utilisateur s'il souhaite apporter des précisions pour le calcul de l'indice de visibilité.

Si l'utilisateur répond par l'affirmative, le serveur lui demande à l'étape 303 de préciser un certain nombre de paramètres, par exemple les types de POI sélectionnables (hôtels, monuments, panneaux publicitaires...), les distances minimale et maximale de prise en compte d'un POI par rapport à une partie de l'itinéraire, la distance optimale de visibilité d'un POI...

Si l'utilisateur répond par la négative, une application du serveur détermine ces paramètres par défauts à l'étape 304. Cette détermination par défaut est par exemple effectuée à partir d'informations personnelles fournies par l'utilisateur : son mode de déplacement, son âge, son sexe...

Lors de l'étape 305, les paramètres ainsi obtenus sont mémorisés dans la base de données 1, afin d'être utilisés ultérieurement pour le calcul des indices de visibilité des POI.

## Revendications

1. Procédé de guidage comprenant les étapes de :

- génération (106) d'un itinéraire entre des points de départ et d'arrivée;

- génération d'indications de guidage incluant :
- la détermination (107) de plusieurs points remarquables proches d'une partie de l'itinéraire à partir d'une base de données (2);
- **caractérisé en ce que** la génération d'indications de guidage inclut en outre :
- le calcul (107) d'un indice représentatif de la visibilité des points remarquables déterminés depuis ladite partie de l'itinéraire ;
- la sélection (107) d'au moins un point remarquable en fonction de l'indice de visibilité ;
- la génération (108) d'une indication de guidage associée au point remarquable sélectionné.

2. Procédé de guidage selon la revendication 1, **caractérisé en ce que** l'indice de visibilité est calculé à partir de paramètres d'au moins deux types différents.

3. Procédé de guidage selon la revendication 1 ou 2, **caractérisé en ce que** le calcul de l'indice de visibilité prend en compte des paramètres choisis dans le groupe comprenant la vitesse de l'utilisateur, son mode de transport, son sexe, son âge, une distance minimale entre lui et le point remarquable, l'angle entre sa direction et une surface du point remarquable, la dimension, la couleur ou la forme du point remarquable.

4. Procédé de guidage selon l'une quelconque des revendications précédentes, **caractérisé en ce qu'**une feuille de route, associée à un itinéraire généré, est établie et inclut les indications de guidage associées au point remarquable sélectionné.

5. Procédé de guidage selon l'une quelconque des revendications précédentes, **caractérisé en ce que** :

- un nouvel itinéraire entre les points de départ et d'arrivée est généré en fonction d'au moins un point remarquable sélectionné en fonction de son indice de visibilité ;
- une feuille de route associée au nouvel itinéraire est générée et inclut les indications associées au point remarquable sélectionné.

6. Procédé de guidage selon la revendication 5, **caractérisé en ce que** le nouvel itinéraire est généré de façon à augmenter l'indice de visibilité du point remarquable sélectionné depuis une partie du nouvel itinéraire.

7. Procédé de guidage selon l'une quelconque des revendications précédentes, **caractérisé en ce qu'**il comprend en outre les étapes de :

- localisation d'un utilisateur empruntant un itinéraire généré;
- restitution à l'utilisateur des indications de guidage à l'approche du point remarquable sélectionné (209).

8. Procédé de guidage selon la revendication 7, **caractérisé en ce que** l'indice de visibilité d'un point remarquable est calculé (208) lorsque l'utilisateur est situé dans un périmètre donné incluant le point remarquable.

9. Procédé de guidage selon l'une quelconque des revendications précédentes, **caractérisé en ce qu'**un point remarquable est sélectionné lorsque son indice de visibilité dépasse un seuil prédéterminé.

10. Procédé de guidage selon l'une quelconque des revendications précédentes, **caractérisé en ce que**, pour ladite partie de l'itinéraire, un nombre maximum prédéfini de points remarquables dont l'indice de visibilité est le plus élevé est sélectionné.

11. Programme d'ordinateur, **caractérisé en ce qu'**il est adapté pour mettre en oeuvre le procédé de l'une quelconque des revendications précédentes.

12. Serveur de guidage (3), **caractérisé en ce qu'**il comprend :

- des moyens d'accès à une base de données de points remarquables ;
- un organe de traitement configuré pour générer un itinéraire entre des points de départ et d'arrivée et configuré pour générer des indications de guidage en déterminant plusieurs points remarquables proches d'une partie de l'itinéraire à partir de la base de données, en calculant un indice représentatif de la visibilité des points remarquables déterminés depuis ladite partie de l'itinéraire, en sélectionnant au moins un point remarquable en fonction de l'indice de visibilité et en générant une indication de guidage associée au point remarquable sélectionné ;
- des moyens de transmission de l'itinéraire généré au terminal d'un utilisateur.

Fig. 1

Fig·2

Fig. 3

**Office européen des brevets**

**RAPPORT DE RECHERCHE EUROPEENNE**

Numéro de la demande

EP 05 29 2182

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/015292 A1 (WIIO ANTTI ET AL) 22 janvier 2004 (2004-01-22) | 1,12 | G01C21/34 G08G1/0968 |
| A | * alinéas [0018], [0040], [0046] - [0048]; revendication 1; figures 1-5 * | 2-11 | |
| A | FR 2 851 042 A (FRANCE TELECOM) 13 août 2004 (2004-08-13) * page 6, ligne 1 - page 8, ligne 13; figures 1,2 * | 1,12 | |
| A | EP 0 678 731 A (NISSAN MOTOR CO., LTD) 25 octobre 1995 (1995-10-25) * page 3, ligne 42 - page 4, ligne 49; figures 1-20 * | 1,12 | |
| A | US 5 936 631 A (YANO ET AL) 10 août 1999 (1999-08-10) * le document en entier * | 1,12 | |

DOMAINES TECHNIQUES RECHERCHES (IPC)

G01C
G08G
G09B

Le présent rapport a été établi pour toutes les revendications

| Lieu de la recherche | Date d'achèvement de la recherche | Examinateur |
|---|---|---|
| Munich | 10 février 2006 | Fourrichon, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 05 29 2182

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-02-2006

| Document brevet cité au rapport de recherche | | Date de publication | Membre(s) de la famille de brevet(s) | | Date de publication |
|---|---|---|---|---|---|
| US 2004015292 | A1 | 22-01-2004 | AT | 281685 T | 15-11-2004 |
| | | | AU | 6610801 A | 17-12-2001 |
| | | | DE | 60106930 D1 | 09-12-2004 |
| | | | DE | 60106930 T2 | 10-11-2005 |
| | | | EP | 1305783 A1 | 02-05-2003 |
| | | | WO | 0195288 A1 | 13-12-2001 |
| FR 2851042 | A | 13-08-2004 | AUCUN | | |
| EP 0678731 | A | 25-10-1995 | DE | 69510493 D1 | 05-08-1999 |
| | | | DE | 69510493 T2 | 28-10-1999 |
| | | | US | 5732385 A | 24-03-1998 |
| US 5936631 | A | 10-08-1999 | AUCUN | | |

Pour tout renseignement concernant cette annexe : voir Journal Officiel de l'Office européen des brevets, No.12/82